# EUROPEAN PATENT APPLICATION

(11) **EP 1 422 912 A2**
(43) Date of publication of application: **26.05.2004**
(21) Application number: 03025733.1
(22) Date of filing: 10.11.2003
(51) Int. Cl.: H04M 1/02

(54) **Mobile terminal , orientation and open/close detection method thereof**

(30) Priority: 20.11.2002 JP 2002336903
(71) Applicant: NEC CORPORATION, Tokyo (JP)
(72) Inventor: Ishida, Takayasu, Kakegawa-shi Shizuoka (JP)
(74) Representative: VOSSIUS & PARTNER

(57) **Abstract**

A mobile terminal, which is a foldable type mobile communication terminal, in which the posture of the mobile terminal is detected by a simple structure that adds some components to an existing opening and closing structure for the upper cabinet of the foldable type mobile communication terminal, is provided. The mobile terminal provides a magnet in the upper cabinet, two magnetic sensors in the lower cabinet, and a controlling means. The magnet moves corresponding to the change of the posture of the mobile terminal. The two magnetic sensors detect the magnetic force from the magnet. The controlling means judges the posture of the mobile terminal based on the detected magnetic force. The magnet and the two magnetic sensors are also used for detecting the opening or closing state of the upper cabinet.

## Description

The present invention relates to a mobile terminal and a posture detecting method thereof, in particular, to a foldable type mobile communication terminal, in which the usability of the mobile terminal by the user is improved by detecting the posture of the mobile terminal.

Recently, a small sized and multi-function mobile terminal has been developed. In this situation, it has been required that the operation ability by the user and the viewing ability of the information on the display by the user are improved. And the number of foldable type mobile communication terminals, in which both a pushing button section and the display are made large, has been increased.

However, the foldable type mobile communication terminal has a weak point that the display can not be viewed by the user when the foldable type communication terminal is closed. In order to solve this problem, a foldable type mobile communication terminal, which has an additional display (sub display) on the rear side of the upper cabinet where the main display is disposed, has been developed.

As a conventional technology, Japanese Patent Application Laid-Open No. 2000-250434 discloses a portable type information instrument and a direction detector using gravity. In this patent application, the posture of the portable type information instrument is detected by the direction detector using gravity, and the displaying direction of the information on the display is changed by the detected three-dimensional gravity direction. With this, the user can view the information on the display more effectively.

This portable type information instrument provides an information displaying means, a direction detecting means (direction detector), a judging means, and a controlling means. The direction detecting means detects the gravity direction that affects the information displaying means. The judging means judges the posture of the information displaying means based on the detected result by the direction detecting means. The controlling means controls the displaying direction of the information on the information displaying means corresponding to the rule that has been decided beforehand for the posture of the information displaying means based on the judged result by the judging means. The direction detecting means provides a common electrode, plural small electrodes, and a liquid type conductor in a container. And when the container slants, the region, which is filled with the liquid type conductor in the container, is changed, and the conductive state between the common electrode and the plural small electrodes is changed. With this, the gravity direction is detected.

At the foldable type mobile communication terminal, when the user views the sub display, it is different from the case that the user views the main display, in many cases, the user views the sub display in a state that the user holds the foldable type mobile communication terminal. In some holding states, the viewing ability for the sub display by the user may decrease.

In order to solve this problem, at this conventional technology, the direction detecting means, which is used for detecting the posture of the information displaying means, is used. However, in case that this direction detecting means is provided only for detecting the posture of the information displaying means, this affects the cost increase and the weight increase.

It is therefore an object of the present invention to provide a mobile terminal and a posture detecting method thereof, in which the posture of the mobile terminal is detected by a simple structure that adds some components to an existing opening and closing structure for the upper cabinet of the foldable type mobile communication terminal. With this structure, the increase of the number of components is made as small as possible.

According to a first aspect of the present invention, for achieving the object mentioned above, there is provided a mobile terminal. The mobile terminal, which is a foldable type mobile communication terminal in which an upper cabinet and a lower cabinet are connected with each other by a hinge, provides a magnet that is disposed in the upper cabinet and changes the position in the upper cabinet corresponding to the change of the posture of the mobile terminal, two magnetic force detecting means that are disposed at designated different positions in the lower cabinet, and detect the magnetic force, which changes corresponding to the change of the position of the magnet, from the magnet, and a controlling means that judges the posture of the mobile terminal based on the detected magnetic force by the two magnetic force detecting means.

According to a second aspect of the present invention, there is provided a mobile terminal. The mobile terminal, which is a foldable type mobile communication terminal in which an upper cabinet and a lower cabinet are connected with each other by a hinge, provides a magnet that is disposed in a magnet disposing region having a hexahedron structure, whose surfaces are nearly parallel to the surfaces of the upper cabinet, in the upper cabinet, and changes the position corresponding to the change of the posture of the mobile terminal by sliding diagonally in the hexahedron structure, two magnetic force detecting means that are disposed at designated different positions in the lower cabinet, and detect the magnetic force, which changes corresponding to the change of the position of the magnet, from the magnet that slid in the diagonal direction in the hexahedron structure, and a controlling means that judges the posture of the mobile terminal based on the detected magnetic force by the two magnetic force detecting means.

According to a third aspect of the present invention, in the first or second aspect, the controlling means changes the displaying direction of letters and signs and images to be displayed on a displaying means that is disposed on the outer surface of the upper cabinet, corresponding to the judged result of the posture of the mobile terminal.

According to a fourth aspect of the present invention, in the first or second aspect, the magnet and the two magnetic force detecting means are also used for detecting the opening or closing state of the upper cabinet.

According to a fifth aspect of the present invention, there is provided a mobile terminal. The mobile terminal provides a magnet that is disposed in a magnet disposing region having a hexahedron structure, whose surfaces are nearly parallel to the surfaces of the cabinet of the mobile terminal, in the upper part of the cabinet, and changes the position corresponding to the change of the posture of the mobile terminal by sliding diagonally in the hexahedron structure, two magnetic force detecting means that are disposed at designated different positions in the lower part of the cabinet, and detect the magnetic force, which changes corresponding to the change of the position of the magnet, from the magnet that slid in the diagonal direction in the hexahedron structure, and a controlling means that judges the posture of the mobile terminal based on the detected magnetic force by the two magnetic force detecting means.

According to a sixth aspect of the present invention, in the fifth aspect, the controlling means changes the displaying direction of letters and signs and images to be displayed on a displaying means that is disposed on a surface of the cabinet, corresponding to the judged result of the posture of the mobile terminal.

According to a seventh aspect of the present invention, for achieving the object mentioned above, there is provided a posture detecting method at a mobile terminal. The posture detecting method at the mobile terminal, which is a foldable type mobile communication terminal in which an upper cabinet and a lower cabinet are connected with each other by a hinge, provides the steps of, changing the position of a magnet that is disposed in the upper cabinet corresponding to the change of the posture of the mobile terminal, detecting the magnetic force, which changes corresponding to the change of the position of the magnet, from the magnet by two magnetic force detecting means that are disposed at designated different positions in the lower cabinet, and judging the posture of the mobile terminal based on the detected magnetic force by a controlling means.

According to an eighth aspect of the present invention, there is provided a posture detecting method at a mobile terminal. The posture detecting method at the mobile terminal, which is a foldable type mobile communication terminal in which an upper cabinet and a lower cabinet are connected with each other by a hinge, provides the steps of, changing the position of a magnet that is disposed in a magnet disposing region having a hexahedron structure, whose surfaces are nearly parallel to the surfaces of the upper cabinet, in the upper cabinet, corresponding to the change of the posture of the mobile terminal by making the magnet slide diagonally in the hexahedron structure, detecting the magnetic force, which changes corresponding to the change of the position of the magnet, from the magnet that slid in the diagonal direction in the hexahedron structure by two magnetic force detecting means that are disposed at designated different positions in the lower cabinet, and judging the posture of the mobile terminal based on the detected magnetic force at the two magnetic force detecting means by a controlling means.

According to a ninth aspect of the present invention, in the seventh or eighth aspect, the posture detecting method further provides the step of changing the displaying direction of letters and signs and images to be displayed on a displaying means that is disposed on the outer surface of the upper cabinet, corresponding to the judged result of the posture of the mobile terminal by the controlling means.

According to a tenth aspect of the present invention, in the seventh or eighth aspect, the posture detecting method further provides the step of detecting the opening or closing state of the upper cabinet by the magnet and the two magnetic force detecting means.

According to an eleventh aspect of the present invention, there is provided a posture detecting method. The posture detecting method provides the steps of, changing the position of a magnet that is disposed in a magnet disposing region having a hexahedron structure, whose surfaces are nearly parallel to the surfaces of the cabinet of the mobile terminal, in the upper part of the cabinet, corresponding to the change of the posture of the mobile terminal by making the magnet slide diagonally in the hexahedron structure, detecting the magnetic force, which changes corresponding to the change of the position of the magnet, from the magnet that slid in the diagonal direction in the hexahedron structure by two magnetic force detecting means that are disposed at designated different positions in the lower part of the cabinet, and judging the posture of the mobile terminal based on the detected magnetic force at the two magnetic force detecting means by a controlling means.

According to a twelfth aspect of the present invention, in the eleventh aspect, the posture detecting method further provides the step of changing the displaying direction of letters and signs and images to be displayed on a displaying means that is disposed on a surface of the cabinet, corresponding to the judged result of the posture of the mobile terminal by the controlling means.

The objects and features of the present invention will become more apparent from the consideration of the following detailed description taken in conjunction with the accompanying drawings in which:
Fig. 1 is a diagram showing the structure detecting the opening and closing states of the upper cabinet of a conventional foldable type mobile communication terminal;
Fig. 2 is a block diagram showing the structure of a foldable type mobile communication terminal at a first embodiment of the present invention;
Fig. 3 is a diagram showing the structure detecting the posture of the foldable type mobile communication terminal at the first embodiment of the present invention;
Fig. 4 is a flowchart showing the operation at the posture detecting method at the first embodiment of the present invention;
Fig. 5 is a diagram showing a first case that the foldable type mobile communication terminal is placed horizontally in a closed state;
Fig. 6 is a diagram showing a second case that the foldable type mobile communication terminal is placed in a closed state, in which an antenna part faces the downward direction;
Fig. 7 is a diagram showing a third case that the foldable type mobile communication terminal is placed in a closed state, in which the antenna part faces the upward direction;
Fig. 8 is a diagram showing a fourth case that the foldable type mobile communication terminal is placed in a closed state, in which a cabinet connecting section faces the downward direction;
Fig. 9 is a diagram showing a fifth case that the foldable type mobile communication terminal is placed in an open state, in which the lower cabinet is put on a surface such as the surface of a desk;
Fig. 10 is a diagram showing a sixth case that the foldable type mobile communication terminal is placed in a slant and closed state;
Fig. 11 is a diagram showing a first example disposing a magnet sliding section at a second embodiment of the present invention;
Fig. 12 is a diagram showing a second example disposing the magnet sliding section at the second embodiment of the present invention;
Fig. 13 is a diagram showing a third example disposing the magnet sliding section at the second embodiment of the present invention;
Fig. 14 is a diagram showing a fourth example disposing the magnet sliding section at the second embodiment of the present invention;
Fig. 15 is a diagram showing a fifth example disposing the magnet sliding section at the second embodiment of the present invention;
Fig. 16 is a diagram showing a sixth example disposing the magnet sliding section at the second embodiment of the present invention; and
Fig. 17 is a diagram showing a seventh example disposing the magnet sliding section at the second embodiment of the present invention.

Referring now to the drawings, embodiments of the present invention is explained in detail.

A foldable type mobile communication terminal provides an upper cabinet and a lower cabinet, and the upper cabinet is connected with the lower cabinet by a cabinet connecting section. Conventionally, in order to detect the opening and closing states of the upper cabinet, an opening and closing detecting structure is used.

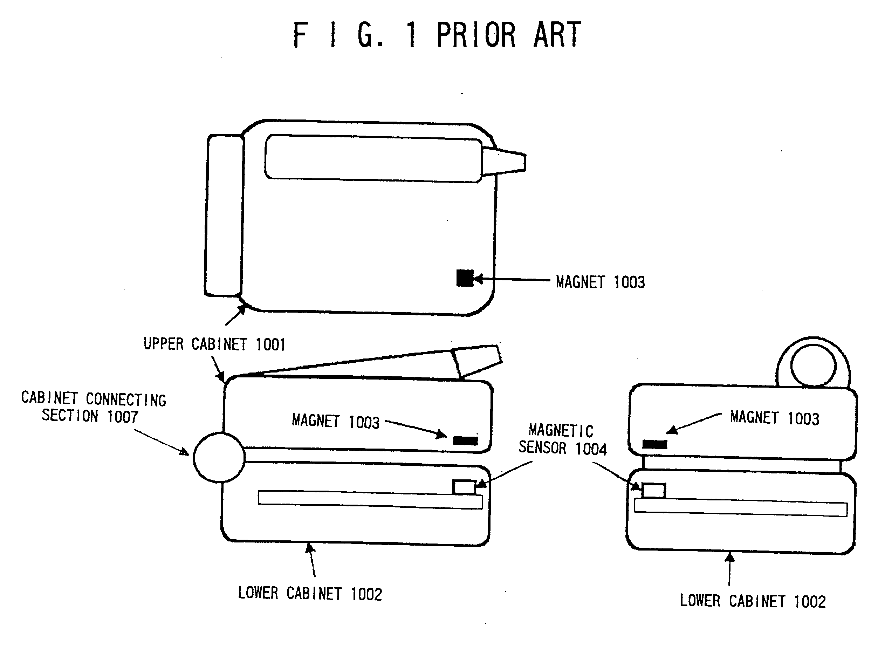

Fig. 1 is a diagram showing the structure detecting the opening and closing states of the upper cabinet of a conventional foldable type mobile communication terminal. As shown in Fig. 1, an upper cabinet 1001 is connected with a lower cabinet 1002 by a cabinet connecting section 1007. And the upper cabinet 1001 provides a magnet 1003 and the lower cabinet 1002 provides a magnetic sensor 1004. When the upper cabinet 1001 was opened, the magnetic sensor 1004 does not detect the magnetic force form the magnet 1003, and the opening state of the upper cabinet 1001 is detected. That is, an opening and closing detecting structure for the upper cabinet is provided in the conventional foldable type mobile communication terminal.

At the embodiments of the present invention, a foldable type mobile communication terminal provides a posture detecting structure by utilizing this existing opening and closing detecting structure that detects the opening and closing states of the upper cabinet of the foldable type mobile communication terminal. At the embodiments of the present invention, it is decided that the magnet can be moved corresponding to the posture of the foldable type mobile communication terminal and plural magnetic sensors are disposed. And a central processing unit (CPU) judges the posture of the foldable type mobile communication terminal by outputs from the plural magnetic sensors. With this, the posture detecting means can be realized by adding minimum number of components and a structure. For example, by using signals from the posture detecting means, the information being displayed in the horizontal direction on the display can be changed in the vertical direction, or the information being displayed in the vertical direction on the display can be changed in the horizontal direction. Further, the power saving mode (standby mode) can be applied to the display. With this, the usability by the user can be improved by the minimum cost increase.

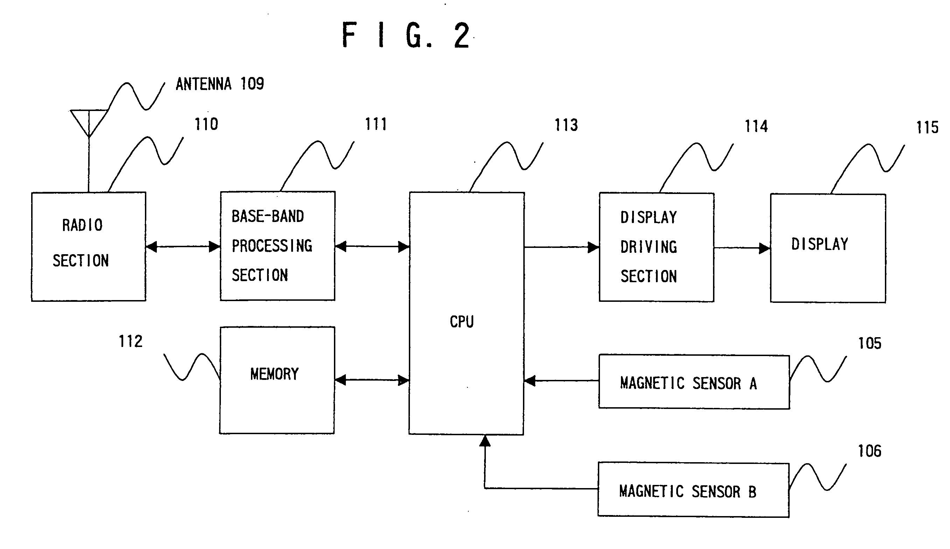

Fig. 2 is a block diagram showing the structure of a foldable type mobile communication terminal at a first embodiment of the present invention. As shown in Fig. 2, the foldable type mobile communication terminal at the first embodiment of the present invention provides an antenna 109, a radio section 110, a base-band processing section 111, a memory 112, a CPU 113, a display driving circuit 114, a display 115, a magnetic sensor A 105, and a magnetic sensor B 106.

The foldable type mobile communication terminal provides audio functions such as an audio signal processing section, a speaker, and a microphone, however, in Fig. 2, these functions are not shown.

The functions of the antenna 109, the radio section 110, the base-band processing section 111 are the same as those at a general mobile communication terminal, therefore, the explanation for these functions is omitted.

The display 115 has two displays. One display is a main display (not shown) disposed on the inner surface of the upper cabinet, and the other display is a sub display (not shown) disposed on the outer surface of the upper cabinet. On the display 115, the information is displayed by that the CPU 113 drives the display driving circuit 114. The memory 112 stores programs that are used for the posture detecting method, the programs are worked by the control of the CPU 113.

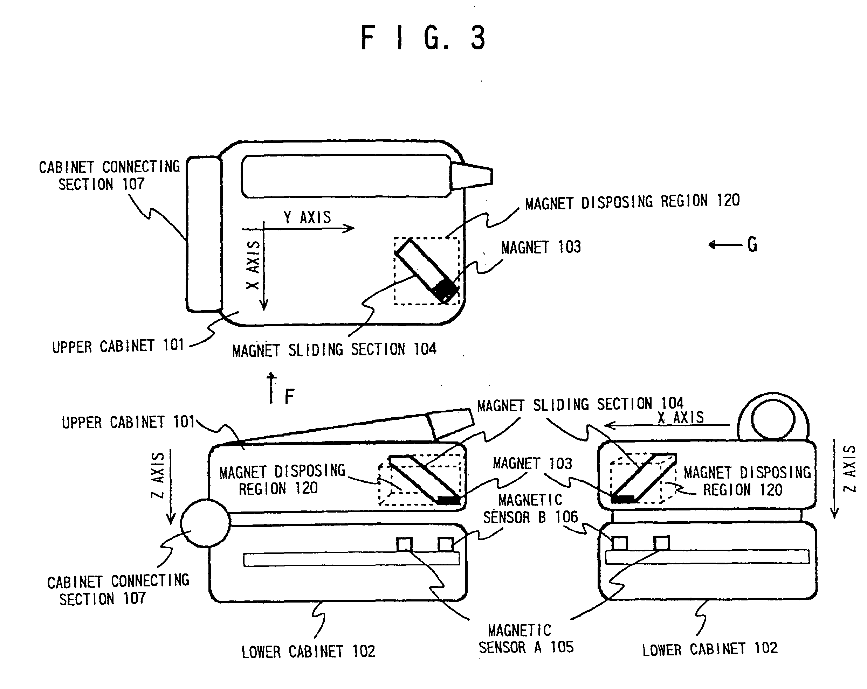

Fig. 3 is a diagram showing the structure detecting the posture of the foldable type mobile communication terminal at the first embodiment of the present invention. In Fig. 3, (a) shows a plane view of the foldable type mobile communication terminal looking from above, (b) shows a sectional view of the foldable type mobile communication terminal looking from the direction F shown in Fig. 3 (a), and (c) shows a sectional view of the foldable type mobile communication terminal looking from the direction G shown in Fig. 3 (a).

In Fig. 3, an upper cabinet 101, a lower cabinet 102, a magnet 103, a magnet sliding section 104, the magnetic sensor A 105, the magnetic sensor B 106, a cabinet connecting section 107 that connects the upper cabinet 101 and the lower cabinet 102, and a magnet disposing region 120 are shown.

As shown in Fig. 3 (a), the upper cabinet 101 provides the magnet 103 in the magnet sliding section 104, and the magnet sliding section 104 is disposed in the magnet disposing region 120. As shown in Fig. 3 (b) and (c), the upper cabinet 101 is connected with the lower cabinet 102 by the cabinet connecting section 107, and the magnetic sensor A 105 and the magnetic sensor B 106 are disposed in the lower cabinet 102.

In Fig. 3, the magnet disposing region 120 has a hexahedron structure, and the magnet sliding section 104 is disposed in the diagonal direction in the magnet disposing region 120. The magnet 103 moves in the magnet sliding section 104 corresponding to the posture of the foldable type mobile communication terminal. That is, the magnet 103 moves three-dimensionally corresponding to the posture of the foldable type mobile communication terminal.

The magnetic sensor A 105 and the magnetic sensor B 106 are positioned separately and at least one of the magnetic sensors A 105 and B 106 detects the magnetic force from the magnet 103. As shown in Fig. 3, the magnetic sensor A 105 is placed at the inner position in the lower cabinet 102 and the magnetic sensor B 106 is placed at the outer position in the lower cabinet 102. Each of the magnetic sensors A 105 and B 106 is desirably placed beneath each end of the magnet sliding section 104. However, the positions of the magnetic sensors A 105 and B 106 are not limited to the positions mentioned above, when at least one of the magnetic sensors A 105 and B 106 can detect the magnetic force from the magnet 103 that changes corresponding to the change of the posture of the foldable type mobile communication terminal.

The CPU 113 judges the posture of the foldable type mobile communication terminal by signals detected from the magnetic sensor A 105 and/or the magnetic sensor B 106.

Further, when the upper cabinet 101 was opened or closed, the magnetic sensor A 105 and/or the magnetic sensor B 106 detects this change, and the CPU 113 judges the opening or closing state of the upper cabinet 101 by receiving the signal(s) from the magnetic sensor A 105 and/or the magnetic sensor B 106.

When the posture of the foldable type mobile communication terminal is changed, the magnet 103 slides in the magnet sliding section 104 corresponding to the posture. The magnet 103 moves in the magnet disposing region 120 in the three-dimensional direction, because the magnet disposing region 120 has the hexahedron structure, and the magnet sliding section 104 is disposed in the diagonal direction in the magnet disposing region 120.

That is, in Fig. 3, when the magnet 103 moves in the direction in which values in the X and Y axes become large, the value in the Z axis becomes large. When the posture is changed, the magnetic sensors A 105 and/or B 106 detects this change and sends signal(s) to the CPU 113. The CPU 113 judges the posture by using predetermined logic based on the signal(s) from the magnetic sensors A 105 and/or B 106.

As mentioned above, by adding one magnetic sensor and a magnet sliding structure (the magnet sliding section 104 and the magnet disposing region 120) to the existing opening and closing detecting structure, the posture can be easily judged. With this, the usability for the user can be improved.

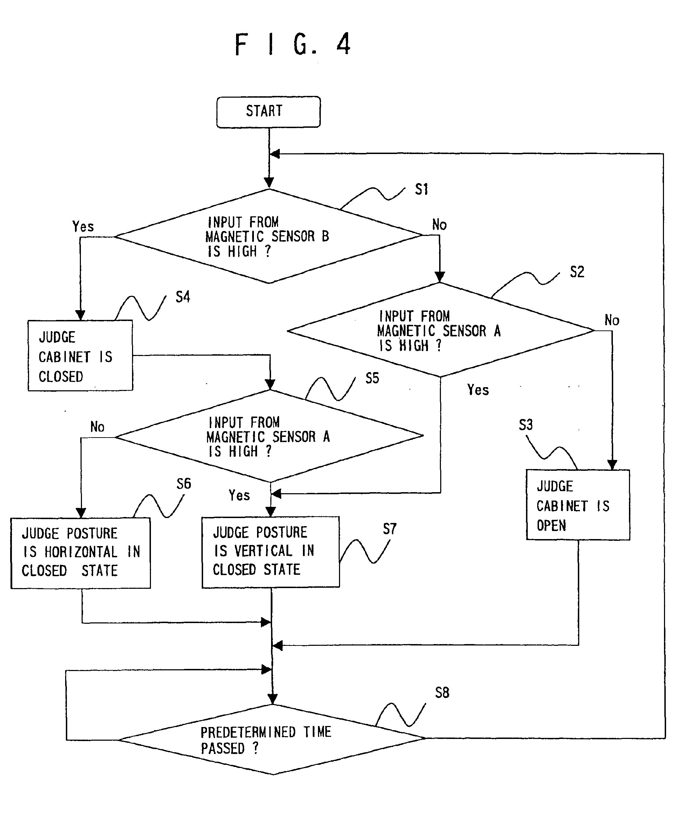

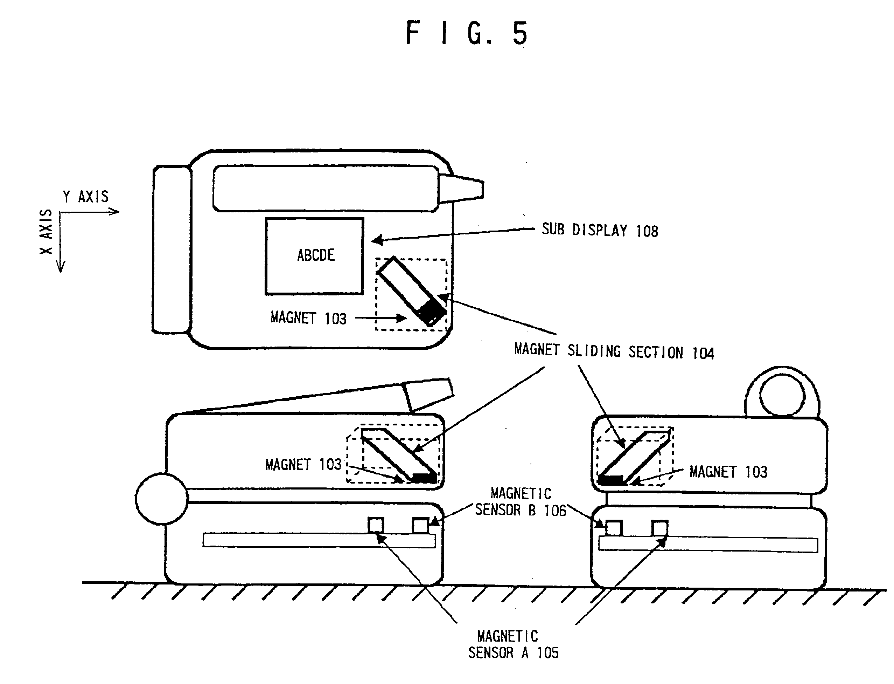

Next, referring to the drawings, the operation of the first embodiment of the present invention is explained. Fig. 4 is a flowchart showing the operation at the posture detecting method at the first embodiment of the present invention. Fig. 5 is a diagram showing a first case that the foldable type mobile communication terminal is placed horizontally in a closed state. In the first case, the magnet 103 is positioned at the place nearest to the magnetic sensor B 106, but is positioned at the place farthest from the magnetic sensor A 105. Therefore, the magnetic sensor B 106 detects the magnetic force from the magnet 103 and outputs a high signal, and the CPU 113 receives a high output from the magnetic sensor B 106 (Yes at step S1), and the CPU 113 judges that the cabinet is closed (step S4). Further, since the magnetic sensor A 105 does not detects the magnetic force and the CPU 113 does not receive a high output from the magnetic sensor A 105 (No at step S5), the CPU 113 judges that the posture of the foldable type mobile communication terminal is horizontal in the closed state (step S6). And the CPU 113 makes the sub display 108 display the information in the Y axis direction. As shown in Fig. 5, letters ABCDE are displayed on the sub display 108 in the Y axis direction.

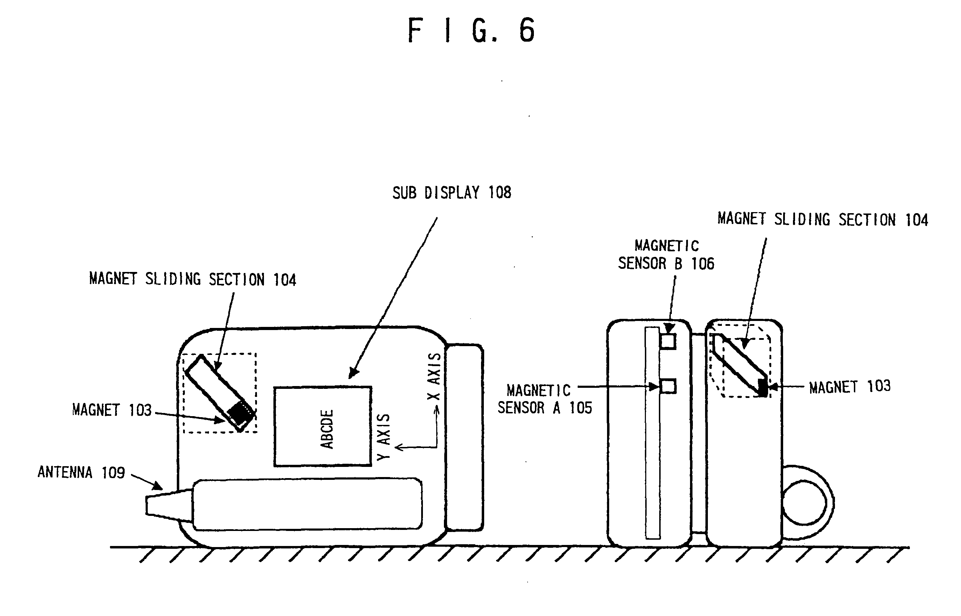

Fig. 6 is a diagram showing a second case that the foldable type mobile communication terminal is placed in a closed state, in which the antenna 109 part faces the downward direction. In the second case, the magnet 103 is positioned at the place nearest to the magnetic sensor A 105, but is positioned at the place farthest from the magnetic sensor B 106. Therefore, the magnetic sensor B does not output a high signal and the CPU 113 does not receive a high output from the magnetic sensor B 106 (No at the step S1), and the CPU receives a high output from the magnetic sensor A 105 (Yes at step S2), and the CPU 113 judges that the posture of the foldable type mobile communication terminal is vertical in the closed state (step S7). In this case, it is defined that this posture is vertical. And the CPU 113 makes the sub display 108 display the information in the X axis direction. As shown in Fig. 6, letters ABCDE are displayed in the X axis direction.

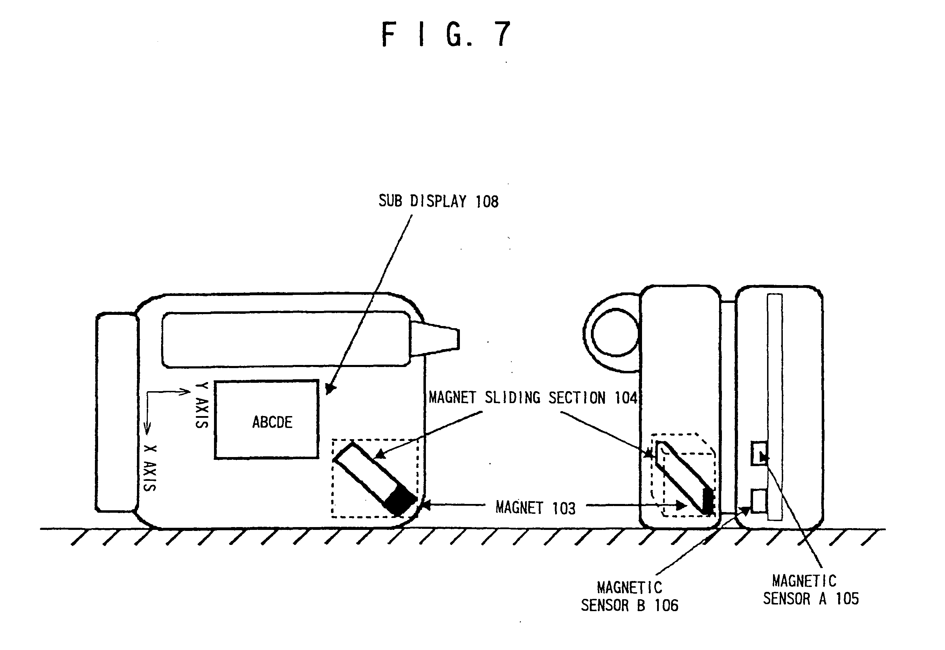

Fig. 7 is a diagram showing a third case that the foldable type mobile communication terminal is placed in a closed state, in which the antenna 109 part faces the upward direction. In the third case, the magnet 103 is positioned at the place nearest to the magnetic sensor B 106, but is positioned at the place farthest from the magnetic sensor A 105. Therefore, the magnetic sensor B 106 detects the magnetic force and outputs a high signal, and the CPU 113 receives a high output from the magnetic sensor B 106 (Yes at the step S1), and the CPU 113 judges that the cabinet is closed (the step S4). Further, since the magnetic sensor A 105 does not detect the magnetic force and the CPU 113 does not receive a high signal from the magnetic sensor A 105 (No at the step S5), the CPU judges that the posture of the foldable type mobile communication terminal is horizontal in the closed state (the step S6). And the CPU 113 makes the sub display 108 display the information in the Y axis direction. As shown in Fig. 7, letters ABCDE are displayed in the Y axis direction.

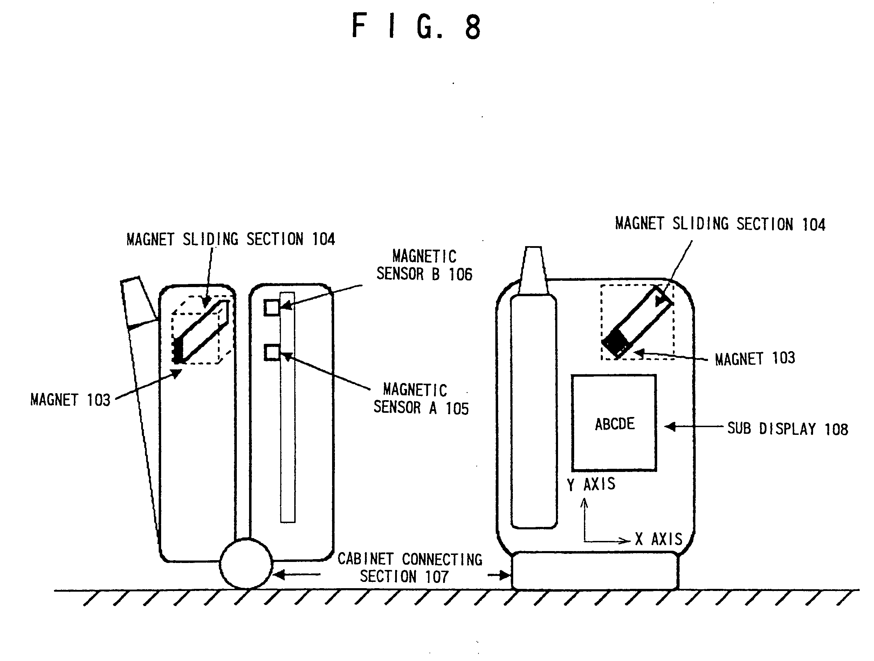

Fig. 8 is a diagram showing a fourth case that the foldable type mobile communication terminal is placed in a closed state, in which the cabinet connecting section 107 faces the downward direction. In the fourth case, the magnet 103 is positioned at the place nearest to the magnetic sensor A 105, but is positioned at the place farthest from the magnetic sensor B 106. Therefore, the magnetic sensor B 106 does not output a high signal, and the CPU 113 does not receive a high output from the magnetic sensor B 106 (No at the step S1), and the CPU 113 receives a high output from the magnetic sensor A 105 (Yes at the step S2), and the CPU 113 judges that the posture of the foldable type mobile communication terminal is vertical in the closed state (the step S7). And the CPU 113 makes the sub display 108 display the information in the X direction. As shown in Fig. 6, letters ABCDE are displayed in the X direction.

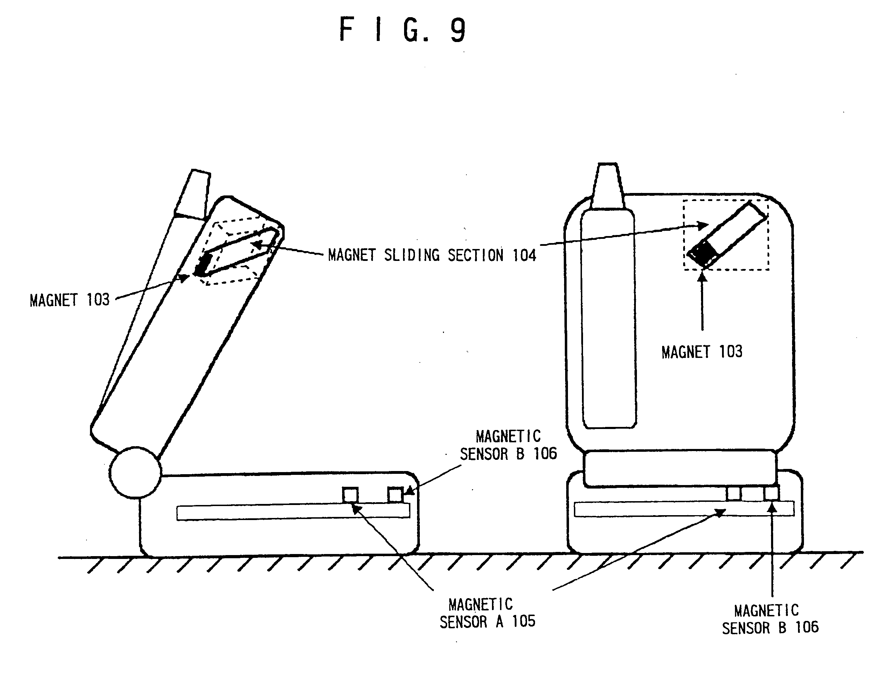

Fig. 9 is a diagram showing a fifth case that the foldable type mobile communication terminal is placed in an open state, in which the lower cabinet 102 is put on a surface such as the surface of a desk. In the fifth case, the magnetic sensors A 105 and B 106 do not detect the magnetic force. Therefore, the CPU 113 does not receive a high output from the magnetic sensor B 106 (No at the step S1), and also does not receive a high output from the magnetic sensor A 105 (No at the step S2). Consequently, the CPU 113 judges that the cabinet is open (step S3).

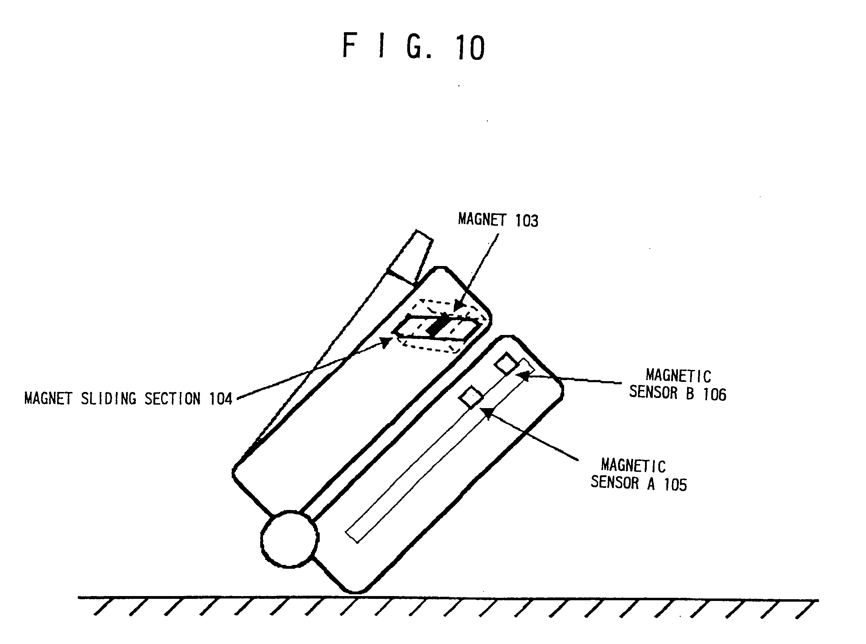

Fig. 10 is a diagram showing a sixth case that the foldable type mobile communication terminal is placed in a slant and closed state. That is, at the sixth case, the foldable type mobile communication terminal is put in a pocket or a purse, and the magnet 103 stops in the middle position in the magnet sliding section 104 and both the magnetic sensors A 105 and B 106 detect the magnetic force. Therefore, the magnetic sensor B 106 detects the magnetic force and outputs a high signal, and the CPU 113 receives a high output from the magnetic sensor B 106 (Yes at the step S1), and the CPU 113 judges that the cabinet is closed (the step S4). Further, since the magnetic sensor A 105 detects the magnetic force and outputs a high signal, and the CPU 113 receives a high output (Yes at the step S5), the CPU 113 judges that the posture of the foldable type mobile communication terminal is vertical in the closed state (the step S7).

After the steps S3, S6, and S7, when a predetermined period has passed (Yes at step S8), a power saving mode (standby mode) is applied to the display 115 and the operation returns to the step S1.

As mentioned above, according to the first embodiment of the present invention, by utilizing the existing opening and closing structure for the upper cabinet 101, the posture detecting function for the foldable type mobile communication terminal can be added in a low cost. Therefore, the usability for the user can be improved by these added functions.

Next, a second embodiment of the present invention is explained. At the first embodiment of the present invention, the magnet sliding section 104 was diagonally disposed in the magnet disposing region 120 having the hexahedron structure in the state when the values in the X and Y axes become large, the value in the Z axis becomes large. At the second embodiment, the magnet sliding section 104 is disposed differently from at the first embodiment.

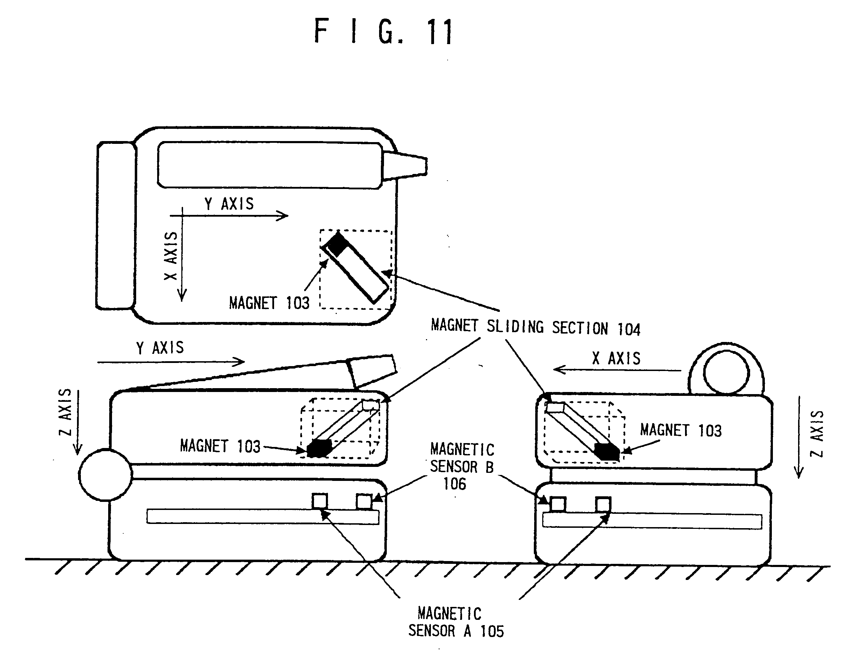

Fig. 11 is a diagram showing a first example disposing the magnet sliding section 104 at the second embodiment of the present invention. As shown in Fig. 11, the magnet sliding section 104 is disposed in a state when the values in the X and Y axes become small, that is, the values in the X and Y axes come near the origin, the value in the Z axis becomes large.

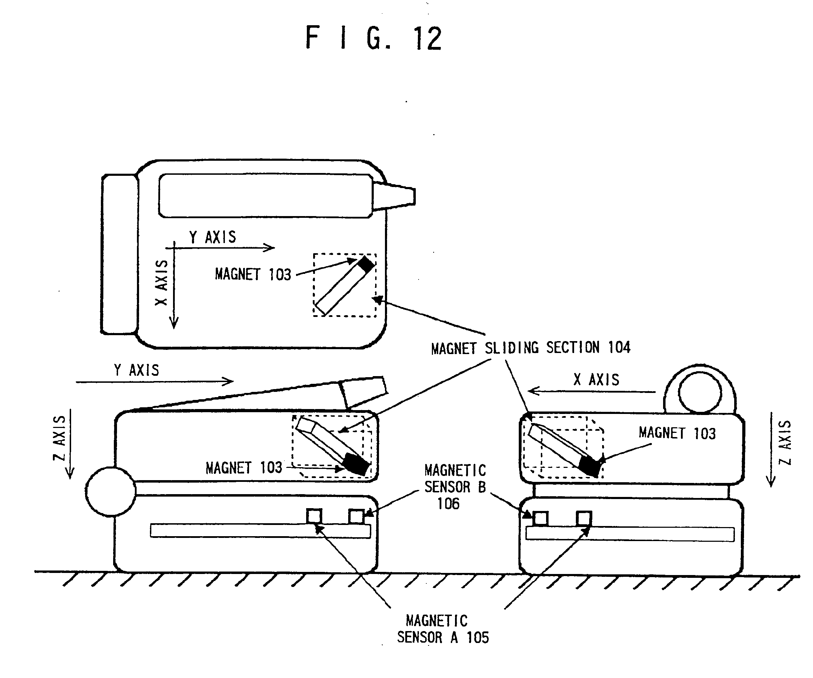

Fig. 12 is a diagram showing a second example disposing the magnet sliding section 104 at the second embodiment of the present invention. As shown in Fig. 12, the magnet sliding section 104 is disposed in a state when the value in the X axis becomes small and the value in the Y axis become large, the value in the Z axis becomes large.

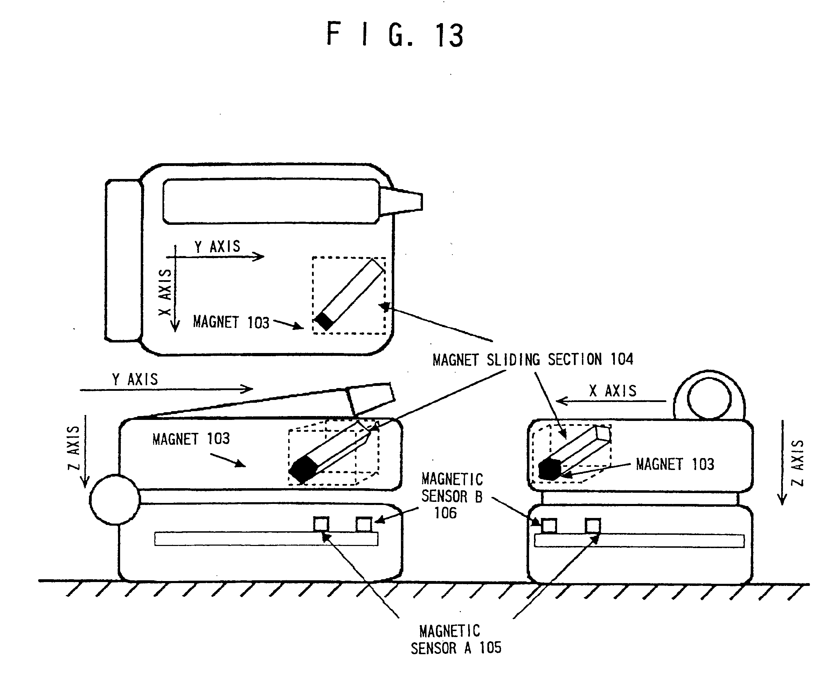

Fig. 13 is a diagram showing a third example disposing the magnet sliding section 104 at the second embodiment of the present invention. As shown in Fig. 13, the magnet sliding section 104 is disposed in a state when the value in the X axis becomes large and the value in the Y axis become small, the value in the Z axis becomes large.

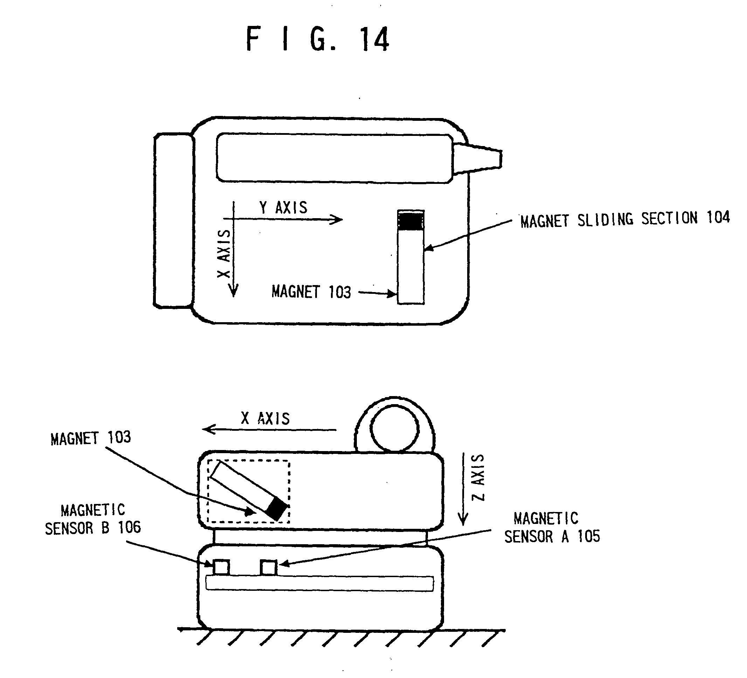

Fig. 14 is a diagram showing a fourth example disposing the magnet sliding section 104 at the second embodiment of the present invention. At the fourth example of the second embodiment of the present invention, the magnet sliding section 104 is disposed in parallel with the X axis in the magnet disposing region 120 having the hexahedron structure. As shown in Fig. 14, the magnet sliding section 104 is disposed in a state when the value in the X axis becomes small, that is, the value in the X axis becomes near the origin, the value in the Z axis becomes large.

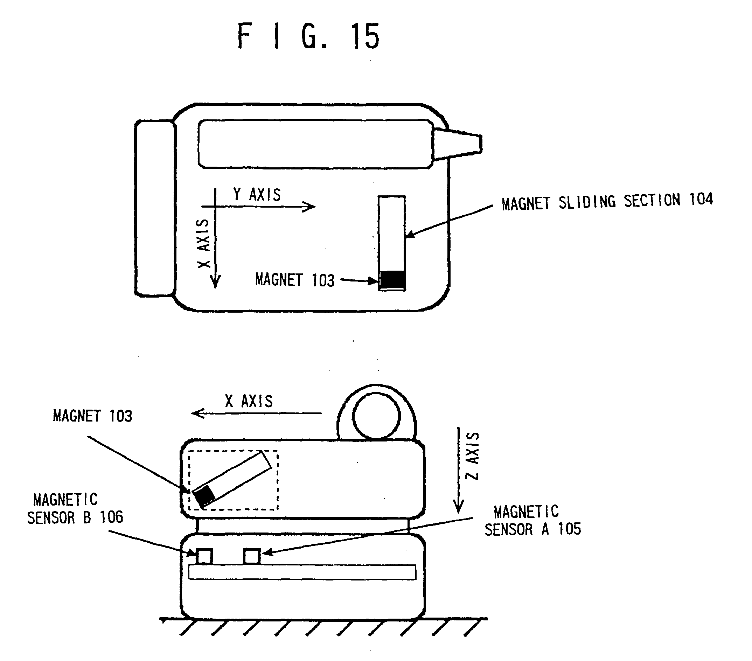

Fig. 15 is a diagram showing a fifth example disposing the magnet sliding section 104 at the second embodiment of the present invention. At the fifth example of the second embodiment of the present invention, the magnet sliding section 104 is disposed in parallel with the X axis in the magnet disposing region 120 having the hexahedron structure. As shown in Fig. 15, the magnet sliding section 104 is disposed in a state when the value in the X axis becomes large, the value in the Z axis becomes large.

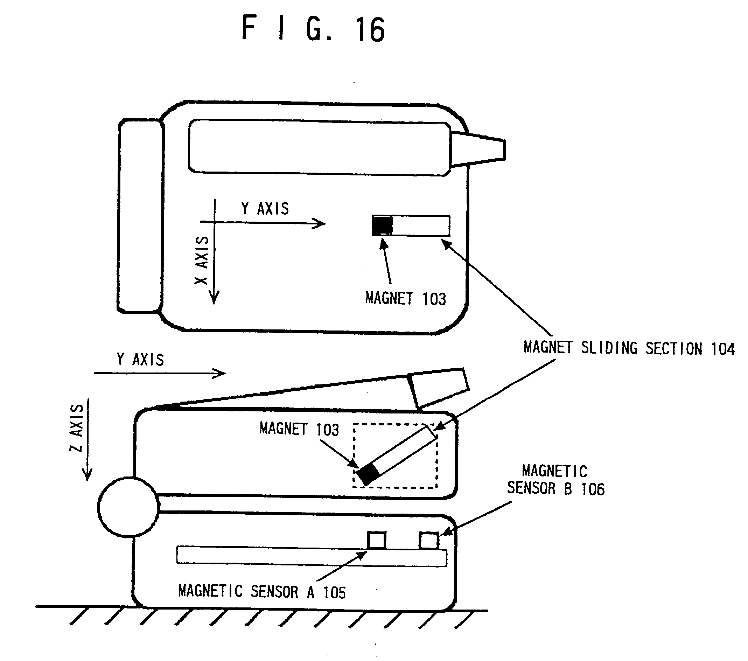

Fig. 16 is a diagram showing a sixth example disposing the magnet sliding section 104 at the second embodiment of the present invention. At the sixth example of the second embodiment of the present invention, the magnet sliding section 104 is disposed in parallel with the Y axis in the magnet disposing region 120 having the hexahedron structure. As shown in Fig. 16, the magnet sliding section 104 is disposed in a state when the value in the Y axis becomes small, that is, the value in the Y axis becomes near the origin, the value in the Z axis becomes large.

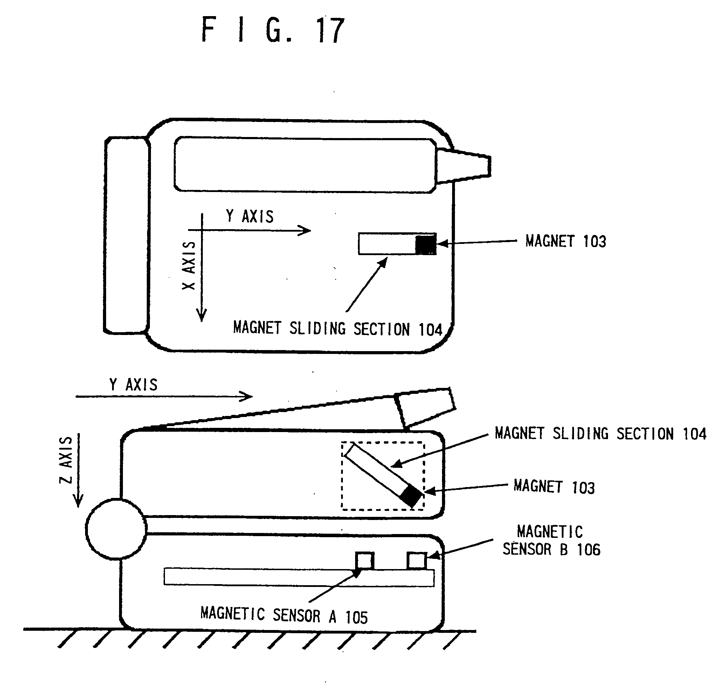

Fig. 17 is a diagram showing a seventh example disposing the magnet sliding section 104 at the second embodiment of the present invention. At the seventh example of the second embodiment of the present invention, the magnet sliding section 104 is disposed in parallel with the Y axis in the magnet disposing region 120 having the hexahedron structure. As shown in Fig. 17, the magnet sliding section 104 is disposed in a state when the value in the Y axis becomes large, the value in the Z axis becomes large.

As mentioned above, according to the second embodiment of the present invention, as the position disposing the magnet sliding section 104 in the magnet disposing region 120, any example at the second embodiment can be used.

As mentioned above, according to the embodiments of the present invention, by utilizing the existing opening and closing structure of the upper cabinet of the foldable type mobile communication terminal, the posture detecting structure of the foldable type mobile communication terminal can be added in a low cost. That is, one magnetic sensor and a magnet sliding section are added. With this, the usability for the user can be improved by displaying the information such as letters, signs, and images on the display in the X or Y axis direction based on the detected result of the posture of the foldable type mobile communication terminal.

At the embodiments of the present invention, the posture detecting structure is applied to the foldable type mobile communication terminal. However, when this posture detecting structure is applied to mobile terminals such as mobile communication terminals and personal digital assistants (PDA), this posture detecting structure is also effective. That is, when one magnet is disposed in a magnet sliding section and the magnet sliding section having the magnet is disposed in a magnet disposing region having a hexahedron structure, and further two magnetic sensors are disposed in the cabinet, the posture of the cabinet can be detected easily by adding a minimum cost.

That is, in case that a mobile communication terminal (not foldable type) having one display is used in the state shown in Fig. 5, the information on the display is shown in the Y axis direction, and in case that the mobile communication terminal is used in the state shown in Fig. 8, the information on the display is shown in the X axis direction, by detecting the posture of the mobile communication terminal.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A mobile terminal, which is a foldable type mobile communication terminal in which an upper cabinet and a lower cabinet are connected with each other by a hinge, comprising:
a magnet that is disposed in said upper cabinet and changes the position in said upper cabinet corresponding to the change of the posture of said mobile terminal;
two magnetic force detecting means that are disposed at designated different positions in said lower cabinet, and detect the magnetic force, which changes corresponding to the change of the position of said magnet, from said magnet; and
a controlling means that judges the posture of said mobile terminal based on the detected magnetic force by said two magnetic force detecting means.

2. A mobile terminal, which is a foldable type mobile communication terminal in which an upper cabinet and a lower cabinet are connected with each other by a hinge, comprising:
a magnet that is disposed in a magnet disposing region having a hexahedron structure, whose surfaces are nearly parallel to the surfaces of said upper cabinet, in said upper cabinet, and changes the position corresponding to the change of the posture of said mobile terminal by sliding diagonally in said hexahedron structure;
two magnetic force detecting means that are disposed at designated different positions in said lower cabinet, and detect the magnetic force, which changes corresponding to the change of the position of said magnet, from said magnet that slid in the diagonal direction in said hexahedron structure; and
a controlling means that judges the posture of said mobile terminal based on the detected magnetic force by said two magnetic force detecting means.

3. A mobile terminal in accordance with claims 1 or 2, wherein:
said controlling means changes the displaying direction of letters and signs and images to be displayed on a displaying means that is disposed on the outer surface of said upper cabinet, corresponding to the judged result of the posture of said mobile terminal.

4. A mobile terminal in accordance with claims 1 or 2, wherein:
said magnet and said two magnetic force detecting means are also used for detecting the opening or closing state of said upper cabinet.

5. A mobile terminal, comprising:
a magnet that is disposed in a magnet disposing region having a hexahedron structure, whose surfaces are nearly parallel to the surfaces of the cabinet of said mobile terminal, in the upper part of said cabinet, and changes the position corresponding to the change of the posture of said mobile terminal by sliding diagonally in said hexahedron structure;
two magnetic force detecting means that are disposed at designated different positions in the lower part of said cabinet, and detect the magnetic force, which changes corresponding to the change of the position of said magnet, from said magnet that slid in the diagonal direction in said hexahedron structure; and
a controlling means that judges the posture of said mobile terminal based on the detected magnetic force by said two magnetic force detecting means.

6. A mobile terminal in accordance with claim 5, wherein:
said controlling means changes the displaying direction of letters and signs and images to be displayed on a displaying means that is disposed on a surface of said cabinet, corresponding to the judged result of the posture of said mobile terminal.

7. A posture detecting method at a mobile terminal, which is a foldable type mobile communication terminal in which an upper cabinet and a lower cabinet are connected with each other by a hinge, comprising the steps of:
changing the position of a magnet that is disposed in said upper cabinet corresponding to the change of the posture of said mobile terminal;
detecting the magnetic force, which changes corresponding to the change of the position of said magnet, from said magnet by two magnetic force detecting means that are disposed at designated different positions in said lower cabinet; and
judging the posture of said mobile terminal based on the detected magnetic force by a controlling means.

8. A posture detecting method at a mobile terminal, which is a foldable type mobile communication terminal in which an upper cabinet and a lower cabinet are connected with each other by a hinge, comprising the steps of:
changing the position of a magnet that is disposed in a magnet disposing region having a hexahedron structure, whose surfaces are nearly parallel to the surfaces of said upper cabinet, in said upper cabinet, corresponding to the change of the posture of said mobile terminal by making said magnet slide diagonally in said hexahedron structure;
detecting the magnetic force, which changes corresponding to the change of the position of said magnet, from said magnet that slid in the diagonal direction in said hexahedron structure by two magnetic force detecting means that are disposed at designated different positions in said lower cabinet; and
judging the posture of said mobile terminal based on the detected magnetic force at said two magnetic force detecting means by a controlling means.

9. A posture detecting method in accordance with claims 7 or 8, further comprising the step of:
changing the displaying direction of letters and signs and images to be displayed on a displaying means that is disposed on the outer surface of said upper cabinet, corresponding to the judged result of the posture of said mobile terminal by said controlling means.

10. A posture detecting method in accordance with claims 7 or 8, further comprising the step of:
detecting the opening or closing state of said upper cabinet by said magnet and said two magnetic force detecting means.

11. A posture detecting method, comprising the steps of:
changing the position of a magnet that is disposed in a magnet disposing region having a hexahedron structure, whose surfaces are nearly parallel to the surfaces of the cabinet of said mobile terminal, in the upper part of said cabinet, corresponding to the change of the posture of said mobile terminal by making said magnet slide diagonally in said hexahedron structure;
detecting the magnetic force, which changes corresponding to the change of the position of said magnet, from said magnet that slid in the diagonal direction in said hexahedron structure by two magnetic force detecting means that are disposed at designated different positions in the lower part of said cabinet; and
judging the posture of said mobile terminal based on the detected magnetic force at said two magnetic force detecting means by a controlling means.

12. A posture detecting method in accordance with claim 11, further comprising the step of:
changing the displaying direction of letters and signs and images to be displayed on a displaying means that is disposed on a surface of said cabinet, corresponding to the judged result of the posture of said mobile terminal by said controlling means.
